# EUROPÄISCHE PATENTSCHRIFT

(11) **EP 1 180 898 B1**
(45) Veröffentlichungstag und Bekanntmachung des Hinweises auf die Patenterteilung: **04.10.2006**
(21) Anmeldenummer: 00117208.9
(22) Anmeldetag: 11.08.2000
(51) Int. Cl.: H04N 1/60

(54) **Verfahren und Vorrichtung zur farbmetrischen Ausmessung einer zweidimensionalen Vorlage**
Method and device for the colorimetric measurement of a two-dimensional document
Méthode et dispositif pour la mesure colorimétrique d'un document bidimensionnel

(43) Veröffentlichungstag der Anmeldung: 20.02.2002
(60) Teilanmeldung: 06011729.8
(73) Patentinhaber: Gretag-Macbeth AG, 8105 Regensdorf (CH)
(72) Erfinder: Von Orelli, Adrian, 8045 Zürich (CH); Pfister, Bruno, 8172 Niederglatt (CH)
(74) Vertreter: Schwabe - Sandmair - Marx

(56) Entgegenhaltungen:
- EP-A- 0 573 069
- EP-A- 0 624 028
- EP-A- 0 785 672
- EP-A- 1 001 610
- US-A- 5 481 380
- US-A- 6 005 968
- US-A- 6 028 682

## Beschreibung

Die Erfindung betrifft ein Verfahren und eine Vorrichtung zur farbmetrischen Ausmessung einer zweidimensionalen Vorlage gemäss dem Oberbegriff des unabhängigen Anspruchs 1 bzw. des unabhängigen Anspruchs 10.

Im Zuge der immer weiteren Verbreitung von farbtauglicher Computerperipherie und den allgemein steigenden Qualitätsansprüchen an die Farbechtheit von Druckerzeugnissen gewinnt auch das sog. Color Management, d.h. die gegenseitige Abstimmung aller farbtauglichen Computer-Peripherie-Geräte (Monitor, Scanner, Drucker etc.) sowie die farbmetrische Regelung von Ausgabegeräten eine immer stärkere Bedeutung.

Ein zentraler Punkt des Color Management ist die Erstellung von herstellerspezifischen oder einer Norm (z.B. ICC) entsprechenden Geräteprofilen. Diese Geräteprofile ermöglichen die Umrechnung von gerätespezifischen Farbwerten in geräteunabhängige und somit allgemeingültige und somit kommunizierbare Farbwerte. Die Erstellung von Geräteprofilen basiert auf der Charakterisierung der farbmetrischen Eigenschaften der Ein- und Ausgabegeräte wie Farbdrucker und Scanner. Diese erfordert die farbmetrische Bewertung von Farbtestkarten (sogenannten Testcharts), wie sie z.B. in der ISO Norm IT8 beschrieben sind. Eine solche Testchart setzt sich üblicherweise aus mehreren Hundert Testfeldern zusammen.

Für das Einmessen der Farbfelder einer Testchart existieren heute eine Reihe von Methoden.

So werden die Farbfelder z.B. mit einem Hand-Farbmessgerät, das heisst einem Colorimeter oder Spektrometer wie z.B. in US-A 5 684 582 beschrieben, einzeln manuell eingemessen, was bei mehreren Hundert Messfeldern einen erheblichen Arbeitsaufwand darstellt.

Oder die Farbfelder werden mit einem scannenden Hand-Messgerät, wie z.B. in DE-A 197 19 066 beschrieben, eingemessen, indem das Messgerät manuell über die Zeilen der Testchart geführt wird. Der Aufwand ist gegenüber der Methode mit manueller Einzelmessung massiv reduziert. Die Qualität des Messresultates hängt jedoch durch den manuellen Betrieb von den Fähigkeiten des Anwenders ab.

Nach DE 197 22 073 ist eine Vorrichtung bekannt, bei welcher ein Zeilendrucker so umgestaltet ist, dass er entweder gleichzeitig mit dem Druckvorgang oder nach dem Druckvorgang mit einem integrierten Farbmesskopf Farbmesswerte von Feldern, die sich auf dem Ausdruck befinden, erfassen kann. Dieses Verfahren hat mehrere Nachteile. Wird während dem Drucken gemessen, ist die Vorlage nicht getrocknet, und die Farbmesswerte können sich nach der Messung noch ändern. Wird nach dem Drucken gemessen, muss das Papier neu eingezogen werden, wodurch Probleme beim Positionieren des Farmesskopfes auf der Vorlage entstehen können. Zudem kann in der Regel ein Zeilendrucker aus Platzgründen nicht mit einer Beleuchtung für Transmissionsmessungen ausgerüstet werden. Es können zudem, bedingt durch den nicht geraden Weg der Vorlage durch den Drucker, nur flexible Vorlagen eingemessen werden. Die Bewertung z.B. eines relativ steifen bedruckten Kartons einer Verpackung ist nicht möglich. Scannende Messgeräte ermitteln die Positionen der Farbfelder aus der Analyse der Messwerte und stellen daher spezielle Anforderungen an die Anordnung der Farbfelder. Die Farbfelder müssen so gross sein oder das Gerät muss so langsam bewegt werden, dass mindestens zwei ganze Messungen pro Feld erreicht werden.

In US 5 369 494 ist ein Messgerät beschrieben, welches die vom Anwender eingeführte Vorlage einziehen und streifenweise einmessen kann. Der Anwender muss pro Farbfeldreihe der Testchart die Vorlage einmal einführen. Das manuelle Einführen stellt für den Anwender einen Aufwand dar und lässt Raum für Fehlmanipula-tionen. Streifenmessgeräte arbeiten scannend und stellen somit wie oben beschrieben spezielle Anforderungen an die Anordnung und Dimension der Farbfelder.

Ein weiteres bekanntes Verfahren besteht darin, ein auf einem XY-Verschiebetisch montiertes Messgerät einzusetzen, welches die Testchart computergesteuert ausmisst. Ein typischer Vertreter einer solchen Anordnung ist die Kombination der unter den Bezeichnungen Spectrolino und SpectroScan vertriebenen Geräte der Anmelderin. Am Anfang des Einmessvorganges muss der Benutzer dem Gerät die Position der Eckpunkte der Messfeldanordnung angegeben, was eine potentielle Fehlerquelle darstellt.

Nach EP 0847 187 ist eine Vorrichtung bekannt, welche die Bildinformation eines kompletten Druckbogens spektral erfassen kann, indem ein Messbalken mit vielen in einer Reihe angeordneten Messköpfen über die Vorlage bewegt wird. Eine solche Vorrichtung kann als spektraler Scanner bezeichnet werden. Mit einem spektralen Scanner lässt sich schnell ein Maximum an Information aus einer Vorlage gewinnen. Eine solche Vorrichtung ist nur mit sehr grossem technischen wie auch finanziellen Aufwand realisierbar, hat einen grossen Platzbedarf und weist eine geringe örtliche Auflösung auf.

Durch die vorliegende Erfindung sollen nun ein Verfahren und eine Vorrichtung der gattungsgemässen Art dahingehend verbessert und die konstruktiven und konzeptionellen Voraussetzungen geschaffen werden, dass mit vertretbarem konstruktiven Aufwand der komplette Ablauf des Einmessens einer Remissions- oder Transmissions-Vorlage ohne Interaktion des Anwenders in kurzer Zeit ausgeführt werden kann, wobei der Arbeitsaufwand des Anwenders auf ein Minimum reduziert wird und gleichzeitig Fehlmanipulationen ausgeschlossen werden.

Die Lösung dieser der Erfindung zugrundeliegenden Aufgabe ergibt sich aus den im kennzeichnenden Teil des unabhängigen Anspruchs 1 bzw. des unabhängigen Anspruchs 10 beschriebenen Merkmalen. Besonders vorteilhafte Ausgestaltungen und Weiterbildungen sind Gegenstand der abhängigen Ansprüche.

Gemäss dem grundlegendsten Gedanken der Erfindung wird also zum einen die Bildinformation der Vorlage hochauflösend elektronisch erfasst und mit Methoden der Bildverarbeitung analysiert und zum andern wird die aus der Analyse gewonnene Information über die Vorlage zur Steuerung der Positionierung des Farbmesskopfes eingesetzt. Der Farbmesskopf dient dabei der Erfassung von farbmetrisch Werten an den sich aus der jeweiligen Anwendung ergebenden Messpositionen auf der Vorlage.

Der Anwendungsbereich der Erfindung liegt beispielsweise bei der Erfassung der farbmetrischen Werte der zahlreichen Farbfelder einer Testchart, welche für die Erstellung von ICC Profilen genutzt werden kann, oder dem Regeln von farbfähigen Ausgabegeräten direkt aus der Messung von farbmetrischen Werten in der Vorlage, welche typischerweise aus einem Bild besteht. Der komplette Ablauf des Einmessens einer Remissions- oder Transmissions-Testchart kann ohne Interaktion des Anwenders in kurzer Zeit ausgeführt werden. Der Arbeitsaufwand des Anwenders wird so auf ein Minimum reduziert, und Fehlmanipulationen können ausgeschlossen werden.

Je nach Ausführungsform der Erfindung kann diese auch als selbst kalibrierende und selbst profilierende und somit farbverbindliche Digital-Kamera respektive Scanner eingesetzt werden.

Im folgenden wird die Erfindung anhand der Zeichnung näher erläutert. Es zeigen:
- Fig.1: eine Gesamtansicht eines ersten Ausführungsbeispiels der erfindungsgemässen Messvorrichtung,
- Fig. 2: ein Schema zur Erläuterung des erfindungsgemässen Verfahrens,
- Fig. 3: eine Gesamtansicht eines zweiten Ausführungsbeispiels der erfindungsgemässen Messvorrichtung,
- Fig. 4: einen schematischen Längsschnitt durch die Messvorrichtung der Fig. 3,
- Fig. 5: eine Draufsicht auf die Messvorrichtung der Fig. 3 bei abgenommenem Gehäusedeckel,
- Fig. 6: eine Gesamtansicht eines dritten Ausführungsbeispiels der erfindungsgemässen Messvorrichtung,
- Fig. 7: einen schematischen Längsschnitt durch die Messvorrichtung der Fig. 6 mit geschlossenem Deckel,
- Fig. 8: eine schematische, um 90° gedrehte Aufsicht nach der Linie VIII-VIII der Fig. 7 und
- Fig. 9: einen schematischen Längsschnitt durch eine Variante der Messvorrichtung der Fig. 6 mit geschlossenem Deckel.

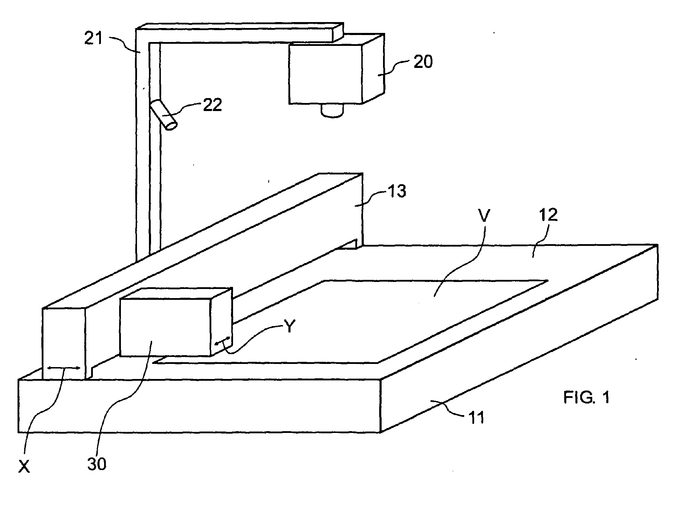

Die in Fig. 1 dargestellte erste Ausführungsform der erfindungsgemässen Messvorrichtung umfasst einen als Ganzes mit 10 bezeichneten XY-Verschiebetisch und eine hochauflösende farbtaugliche bildgebende Einheit bzw. fotoelektrische Abtasteinrichtung in Form einer Digitalkamera 20, welche mittels eines Stativs 21 über dem Verschiebetisch 10 montiert ist. Ferner ist am Stativ 20 eine Beleuchtungseinrichtung 22 befestigt.

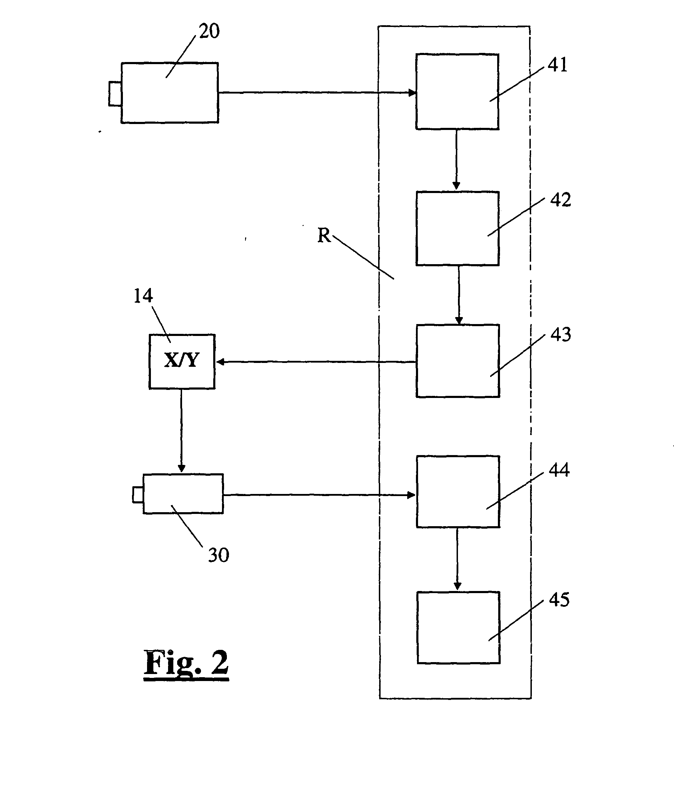

Der Verschiebetisch 10 umfasst einen im wesentlichen rechteckigen Unterbau 11 mit einer Auflageplatte 12 für eine auszumessende Vorlage V (z.B. eine Farbtestkarte) sowie eine Brücke 13, an der ein Spektralmesskopf 30 montiert ist. Die Brücke 13 ist mittels nicht dargestellter motorischer Antriebsmittel in Richtung des Doppelpfeils X parallel zur Längsseite des Unterbaus verschiebbar. Der Spektralmesskopf 30 ist mittels nicht dargestellter motorischer Antriebsmittel in Richtung des Doppelpfeils Y parallel zur Breitseite des Unterbaus verschiebbar an der Brücke 13 gelagert. Durch Verschiebung der Brücke in X-Richtung und Verschiebung des Spektralmesskopfs an der Brücke in Y-Richtung kann der Spektralmesskopf 30 an jede beliebige Messposition auf der auf der Auflageplatte 12 befindlichen Vorlage V gefahren werden, wobei die Steuerung der Bewegung des Spektralmesskopfs durch einen Rechner R (Fig. 2) erfolgt, der die Angaben über die anzufahrenden Messpositionen enthält. Der Rechner R steuert auch die Auslösung der Messvorgänge des Spektralmesskopfs 30 und den Transfer der dabei ermittelten Messwerte (hier Spektralmesswerte) in einen Speicher des Rechners.

Der Spektralmesskopf 30 ist in an sich bekannter Weise als kombinierter Remissions/Transmissionsmesskopf ausgebildet. Für Transmissionsmessungen ist die Auflageplatte 12 transparent ausgebildet, und im Unterbau ist eine hier nicht dargestellte Beleuchtungsanordnung vorgesehen, welche die nutzbare, vom Spektralmesskopf 30 überstreichbare Fläche der Auflageplatte 12 möglichst homogen ausleuchtet. Der rechnergesteuerte Verschiebetisch 10 und der Spektralmesskopf 30 entsprechen soweit voll und ganz dem Stand der Technik, so dass der Fachmann keiner weiteren Erläuterung bedarf. Ein Beispiel für einen bekannten Spektralmesskopf und einen bekannten Verschiebetisch seien die unter den Bezeichnungen "Spectrolino" bzw. "SpectroScan" von der Anmelderin vertriebenen Geräte angeführt. Ein für die vorliegende Erfindung geeigneter bekannter Spektralmesskopf ist beispielsweise auch in der US-A 6 043 893 beschrieben. Anstelle des Spektralmesskopfs könnte auch ein ebenfalls herkömmlicher Dreibereich- oder ähnlicher Farbmesskopf vorgesehen sein.

Die ebenfalls konventionelle und an den Rechner R angeschlossene, farbtaugliche Digitalkamera 20 erfasst die auf der Auflageplatte 12 liegende Vorlage V und erzeugt eine hochaufgelöste digitale Farbdarstellung der gesamten oder zumindest des relevanten Bereichs der Vorlage. Bei opaken Vorlagen dient die Beleuchtungseinrichtung 22 zur Ausleuchtung der Vorlage während der Abtastung durch die Digitalkamera. Im Falle von transparenten Vorlagen wird dazu die im Unterbau befindliche Beleuchtungsanordnung eingesetzt.

Das Zusammenwirken der einzelnen Komponenten der Messvorrichtung sowie das grundlegende Prinzip des erfindungsgemässen Messverfahrens sind schematisch in Fig. 2 dargestellt.

Zunächst wird - gesteuert durch den Rechner R - mittels der Digitalkamera 20 die Vorlage V pixelweise fotoelektrisch abgetastet und aus den dabei gewonnenen Abtastwerten eine digitale Farbdarstellung 41 der Vorlage V gebildet und im Rechner R abgespeichert. Die Brücke 13 und der Spektralmesskopf 30 befinden sich dabei in einer Ruheposition, in der sie ausserhalb des Erfassungsbereichs der Digitalkamera liegen. Aus dieser Farbdarstellung 41 ermittelt dann der Rechner R nach an sich bekannten Methoden der Bildverarbeitung mittels einer passenden Analyse-Software 42 und anhand vorgängig gespeicherter Referenzdaten von Vorlagen die Gesamtheit aller Messpositionen 43, an denen die Vorlage mittels des Spektralmesskopfs 30 farbmetrisch ausgemessen werden soll. Näheres dazu wird weiter unten noch ausgeführt. Der Rechner R steuert dann aufgrund dieser so ermittelten Messpositionen 43 in an sich bekannter Weise die insgesamt mit 14 bezeichneten Antriebsmittel für die Verschiebung der Brücke 13 und des Spektralmesskopfs 30 an und verfährt damit den Spektralmesskopf 30 sukzessive an alle Messpositionen. In jeder Messposition wird eine Messung ausgelöst. Die dabei gewonnenen, gesamthaft mit 44 bezeichneten spektralen Messdaten werden in den Rechner R eingelesen und dort für die weitere Verarbeitung durch ein geeignetes Verarbeitungsprogramm 45, z.B. ein solches zur Erstellung von Geräteprofilen, gespeichert.

Die beschriebenen Vorgänge gelten grundsätzlich in gleicher Weise für die Ausmessung von opaken wie auch von transparenten Vorlagen, der Unterschied liegt im wesentlichen lediglich in der Ausleuchtung der Vorlage während der bilderzeugenden Abtastung mittels der Digitalkamera und der spektralen Ausmessung mittels des Spektralmesskopfs.

Unter hochauflösend wird im Zusammenhang mit der vorliegenden Erfindung verstanden, dass die Grösse der Abtastpunkte der bildgebenden Einheit, in diesem Ausführungsbeispiel also der Digitalkamera 20, wesentlich geringer, insbeondere um einen Faktor >10 geringer ist als die Messapertur des Farbmesskopfs 30.

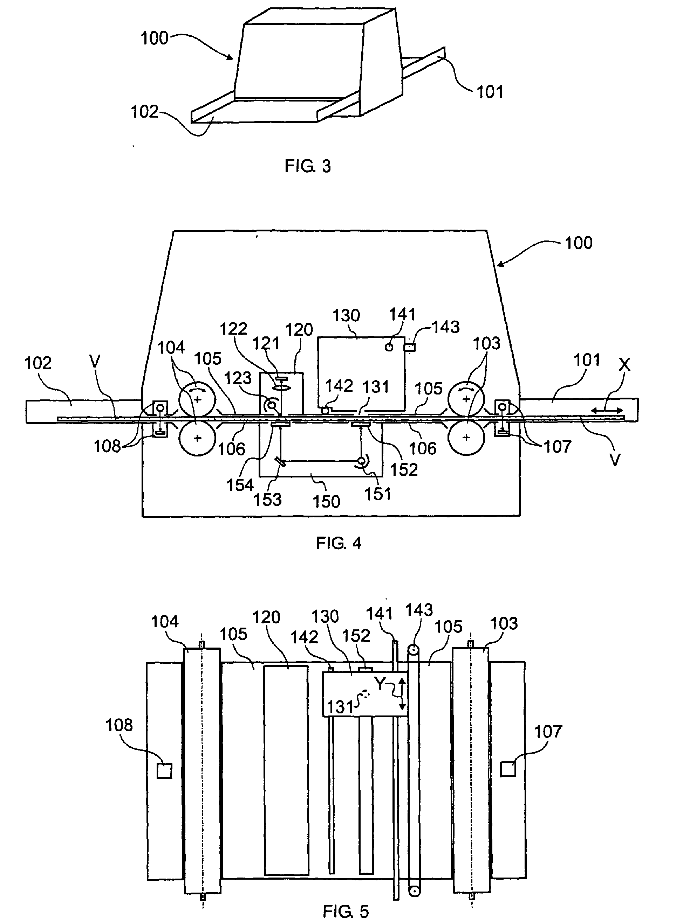

In den Figuren 3-5 ist schematisch eine nach dem Prinzip eines Einzug-Scanners aufgebaute Ausführungsform der erfindungsgemässen Messvorrichtung dargestellt. Die dargestellte Messvorrichtung umfasst ein Gehäuse 100 und an zwei gegenüberliegenden Seiten desselben eine Einzugslade 101 und eine Ausgabelade 102, welche im wesentlichen in einer Ebene liegen. Im Inneren des Gehäuses 100 befindet sich ein Vorlagentransportmechanismus, der zwei motorisch angetriebene Walzenpaare 103 und 104, Führungen 105 und 106 und zwei Lichtschranken 107 und 108 umfasst. Der Vorlagentransportmechanismus wird von einer hier nicht dargestellten, konventionellen internen Steuerung in Kombination mit einem externen Rechner gesteuert und gestattet es, eine in die Einzugslade 101 eingeführte Vorlage V in Richtung des Pfeils X längs eines durch die Führungen 105 und 106 definierten, im wesentlichen ebenen Pfades durch das Gehäuse in die Ausgabelade 102 zu transportieren und umgekehrt.

Im Gehäuse 100 befindet sich ferner im Bewegungspfad der Vorlage V feststehend eine farbtaugliche bildgebende Einheit bzw. fotoelektrische Abtasteinrichtung in Form einer Abtastzeile (Zeilenkamera) 120, welche sich über die gesamte Breite (quer zur Vorschubrichtung X) der Vorlage V erstreckt, so dass sie die gesamte Breite der Vorlage erfassen kann. Die bildgebende Einheit bzw. Zeilenkamera 120 kann z.B. in an sich bekannter Weise als farbtauglicher CIS (Contact Image Sensor) aufgebaut sein. Sie umfasst typischerweise einen optoelektrischen Zeilensensor 121, eine optische Abbildungseinheit 122 und eine Beleuchtung 123 für die Auflichtmessung von opaken Vorlagen. Die bildgebende Einheit 120 tastet die Vorlage quer zur Transportrichtung X derselben (in Richtung des Pfeils Y, Fig. 5) punktweise ab, wobei die zweite Abtastdimension durch den Vorschub der Vorlage erfasst wird. Die bildgebende Einheit ist in an sich bekannter Weise mit der internen Steuerung und dem externen Rechner verbunden, der die von ihr erzeugten Abtastsignale einliest und daraus eine digitale Farbdarstellung der Vorlage bildet und abspeichert.

Soweit entspricht die Messvorrichtung im wesentlichen einem herkömmlichen farbtauglichen Einzug-Scanner für opake Vorlagen, so dass der Fachmann diesbezüglich keiner näheren Erläuterung bedarf.

Gemäss einem wichtigen Aspekt der Erfindung ist im Gehäuse 100 neben der bildgebenden Einheit 120 zusätzlich ein an sich bekannter Farb- oder Spektralmesskopf 130 vorgesehen und mittels einer Verschiebeeinheit quer zur Transportrichtung X der Vorlage V in Richtung des Pfeils Y (Fig. 5) über die gesamte Breite der Vorlage hin-und herbewegbar. Die konventionell aufgebaute Verschiebeeinheit besteht aus einer Führungswelle 141, einer Auflage 142 und einem motorisch angetrieben Antriebsriemen 143 (Fig. 5) und wird vom externen Rechner in ebenfalls an sich bekannter Weise angesteuert. Die Verschiebeeinheit erlaubt es, den Farb- bzw. Spektralmesskopf 130 quer über die gesamte Vorlagenbreite zu verstellen.

Der Farb- bzw. Spektralmesskopf 130 kann mit allen üblicherweise in der Farbmetrik eingesetzten Technologien ausgeführt sein. Er besteht typischerweise aus einer Beleuchtungseinheit, welche vorzugsweise als 45°-Ringbeleuchtung ausgeführt ist, und einem Aufpickkanal, der unter 0° das zu messende Licht einem Modul, welches die spektrale Selektion vornimmt, zuführt. Die Wellenlängenselektion ist vorzugsweise mit einem Diodenzeilen-Spektrometer oder mit einem Satz von Interferenzfiltern ausgeführt. Eine weitere Methode zur Wellenlängenselektion basiert auf dem Einsatz von LED mit verschiedenen Wellenlängen als Beleuchtung und einem spektral breitbandigen fotoelektrischen Empfänger. Ein solches Spektrometer ist z.B. in der US-A 6 043 893 beschrieben.

Durch Querverstellung des Farbmesskopfs 130 in Y-Richtung mittels der Verschiebeeinheit und durch Längsbewegung der Vorlage in X-Richtung mittels des Vorlagentransportmechanismus kann der Farbmesskopf 130 an jeder beliebigen Messposition auf der Vorlage V positioniert werden und die Vorlage mittels des Messkopfs an diesen Messpositionen farbmetrisch (bzw. spektral) ausgemessen werden. Die Steuerung der Positionierung des Farbmesskopfs 130 erfolgt wie beim ersten Ausführungsbeispiel wiederum durch den Rechner aufgrund der von diesem aus der digitalen Farbdarstellung der Vorlage ermittelten Messpositionen.

Um auch Messungen an transparenten Vorlagen durchführen zu können, ist unterhalb der Messblende 131 des Farbmesskopfs 130 eine zusätzliche Beleuchtungsanordnung 150 vorgesehen. Diese umfasst eine sich quer über die Vorlage erstreckende Leuchtquelle 151 (z.B. eine Leuchtstoffröhre oder eine linienförmige Anordnung von Leuchtdioden) und einen Diffusor 152, der sich längs der Bewegungsbahn des Farbmesskopfs 130 unmittelbar gegenüber dessen Messblende erstreckt. Die Beleuchtungsanordnung 150 kann gleichzeitig auch als Transmissionsbeleuchtung für die bildgebende Einheit bzw. Zeilenkamera 120 ausgebildet sein und umfasst zu diesem Zweck eine Umlenkoptik 153 und einen weiteren Diffusor 154, der sich unter der bildgebenden Einheit längs derselben erstreckt. Selbstverständlich können z.B. aus Platzgründen für den Farbmesskopf 130 und die bildgebende Einheit 120 auch separate Transmissionsbeleuchtungen vorgesehen sein.

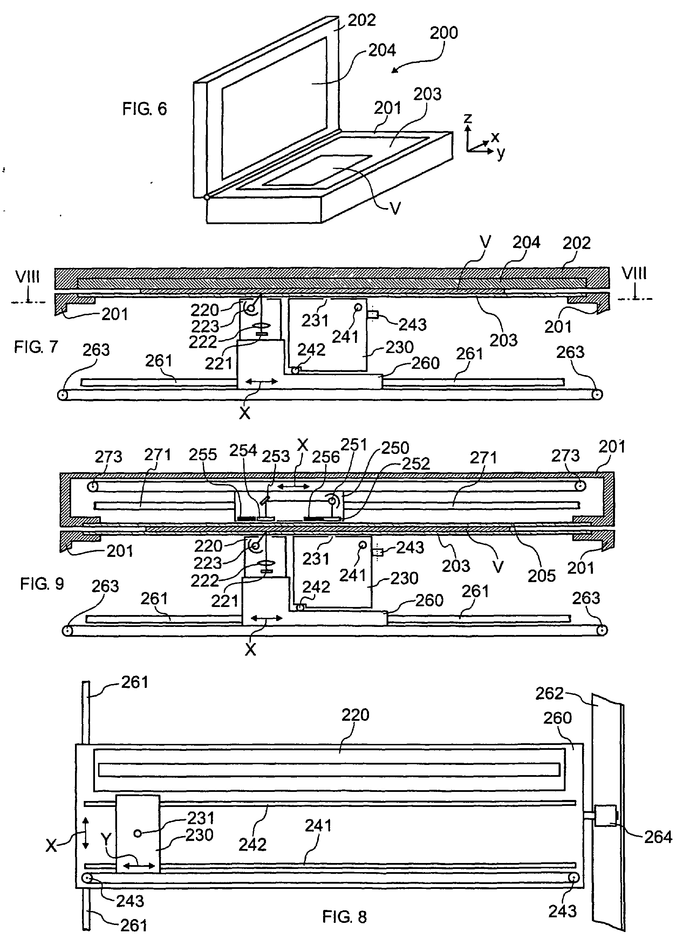

In den Figuren 6-9 ist schematisch eine nach dem Prinzip eines Flachbett-Scanners aufgebaute Ausführungsform der erfindungsgemässen Messvorrichtung dargestellt. Sie besteht einerseits aus einem Aufbau, wie er bei Flachbettscannern üblich ist, und andererseits aus einem über den ganzen Vorlagenbereich verschiebbaren Farbmesskopf. Der Unterschied zu einem Einzug-Scanner besteht im wesentlichen nur darin, dass die Vorlage ortsfest und dafür die Abtastzeile relativ zur Vorlage beweglich angeordnet ist.

Der Aufbau 200 besteht aus einem Unterteil 201 und einem aufklappbaren Deckel 202 mit einer weissen Einlage 204, die als Hintergrund für Remissionsmessungen dient. Der Unterteil 201 umfasst ein Gehäuse, welches oben von einer Glassplatte 203 abgeschlossen ist, auf welche die zu messende Vorlage V gelegt wird. Unter der Glassplatte (Fig. 7) befindet sich eine bildgebende Einheit in Form einer Abtastzeile (Zeilenkamera) 220, welche vorzugsweise als CIS (Contact Image Sensor) ausgeführt ist und ihrerseits aus einem optoelektrischen Zeilensensor 221, einer optischen Abbildungseinheit 222 und einer Beleuchtungseinheit 223 für die Auflichtsmessung von opaken Vorlagen besteht. Der Zeilensensor erstreckt sich in Y-Richtung und ist so angeordnet, dass er die gesamte Breite der Vorlage erfassen kann.

Neben der Abtastzeile 220 ist ein spektral arbeitender Farbmesskopf 230 mit einer Messöffnung 231 auf einer Verschiebeeinheit parallel zur Abtastzeile 220, also in Richtung des Pfeils Y verschiebbar angeordnet. Die Verschiebeeinheit ist im wesentlichen konventionell ausgebildet und besteht aus einer Führungswelle 241, einer Auflage 242 und einem motorisch angetrieben Antriebsriemen 243 (Fig. 8). Die Verschiebeeinheit erlaubt es, den Farb- bzw. Spektralmesskopf 230 quer über die gesamte Vorlagenbreite zu verstellen.

Die bildgebende Einheit bzw. Abtastzeile 220 und der Farbmesskopf 230 sind ihrerseits auf einer zweiten Verschiebeeinheit montiert, welche aus einem Schlitten 260, einer Führungswelle 261, einer Auflage 262, einer Rolle 264 und einem motorisch angetrieben Antriebsriemen 263 (Fig. 7) besteht. Diese zweite Verschiebeeinheit erlaubt es, die Abtastzeile 220 zusammen mit dem Farbmesskopf 230 in Richtung des Pfeils X zu verschieben, so dass sie die ganze Vorlage V abtasten können.

Die Verschiebeeinheiten, die Abtastzeile und der Farbmesskopf werden wie beim vorgehenden Ausführungsbeispiels wiederum von einer hier nicht dargestellten, konventionellen internen Steuerung in Kombination mit einem externen Rechner in an sich bekannter Weise angesteuert.

Um auch Messungen an transparenten Vorlagen durchführen zu können, ist bei der in Fig. 9 skizzierten Ausführungsvariante der erfindungsgemässen Messvorrichtung im Deckel 202 des Aufbaus eine zusätzliche Beleuchtungsanordnung 250 vorgesehen, welche vorzugsweise - analog dem Ausführungsbeispiel der Figuren 3-5 - gleichzeitig für die Abtastzeile 220 und für den Farbmesskopf 230 dient. Ausserdem ist anstelle der weissen Einlage 204 eine transparente Platte 205 vorgesehen. Die Beleuchtungsanordnung 250 umfasst eine sich quer über die Vorlage erstreckende Leuchtquelle 251 (z.B. eine Leuchtstoffröhre), einen Diffusor 252, eine Umlenkoptik 253 und einen weiteren Diffusor 254 sowie schwarze Hintegründe 255 und 256. Die Beleuchtungsanordnung 250 ist auf einer weiteren Verschiebeinheit angeordnet, welche im wesentlichen gleich aufgebaut ist wie diejenige zur gemeinsamen Verschiebung von Abtastzeile 220 und Farbmesskopf 230 in X-Richtung und aus einer Führungswelle 271 und einem motorisch angetrieben Antriebsriemen 273 besteht. Die zusätzliche Beleuchtungsanordnung 250 wird während der Abtastung bzw. farbmetrischen Ausmessung parallel und synchron zur Abtastzeile 220 bzw. zum Farbmesskopf 230 in Richtung des Pfeils X bewegt. Je nach Relativstellung der zusätzlichen Beleuchtungseinheit 250 können Remissionsmessungen mit weissem oder mit schwarzem Hintergrund durchgeführt werden.

Mit Ausnahme des Vorhandenseins des Farbmesskopfs 230 entspricht die Messvorrichtung in Aufbau und Funktionsweise im wesentlichen einem herkömmlichen farbtauglichen Flachbett-Scanner für opake bzw. transparente Vorlagen, so dass der Fachmann diesbezüglich keiner näheren Erläuterung bedarf. Die Ansteuerung der einzelnen Komponenten dieser Ausführungsform erfolgt analog der Einzug-Scanner-Ausführungsform durch die konventionelle interne Steuerung in Kombination mit einem externen Rechner und bedarf deshalb ebenfalls keiner besonderen Erläuterung.

Im folgenden wird das erfindungsgemässe Messverfahren anhand des Beispiels der Ausmessung einer opaken Farbtestkarte (Testchart) näher beschrieben (Remissionsmessung).

Die zu messende Testchart wird auf der erfindungsgemässen Messvorrichtung gemäss einer der beschriebenen Ausführungsformen positioniert. Mit der Digitalkamera 20 oder der Abtastzeile 120 bzw 220 wird zuerst in an sich konventioneller Weise ein Farbbild der Testchart aufgenommen und im Rechner abgespeichert. Dieses Farbbild wird mit dem Rechner mit Methoden der Bildverarbeitung analysiert, wobei der Typ der Testchart sowie die genaue Lage der einzelnen Farbfelder (Messpositionen) bestimmt werden. Algorithmen, die diese Aufgabe ausführen können, sind heute hinlänglich bekannt und in der einschlägigen Literatur beschrieben.

Ein mögliches Vorgehen für die Analyse der Testchart ist wie folgt: Zuerst wird mit der Segmentierung der Felder gleicher Farbe sowie der Bestimmung deren Schwerpunkts eine erste Näherung der Koordinaten der Farbfelder berechnet. Bei der Segmentierung der Felder kann die Tatsache ausgenutzt werden, dass die Farbfelder einer Testkarte üblicherweise die gleiche Grösse haben. Die so gewonnene Information über den Aufbau der Farbtestkarte (Lage und Farbe der Farbfelder) wird mit den (im Rechner gespeicherten) Referenzdaten der Farbtestkarten verglichen und so der Typ der Farbtestkarte bestimmt. Da jetzt die Sollage der Farbfelder aus dem Aufbau der Referenzkarte bekannt ist, kann die zuvor berechnete Lage jedes einzelnen Farbfelds überprüft und allfällige durch Artefakte im Bild entstandene Segmentierungsfehler und somit Positionierungsfehler eliminiert werden.

Anschliessend werden mit dem Farbmesskopf 30 bzw. 130 bzw. 230 an den so ermittelten Messpositionen die farbmetrischen Werte und ev. das Spektrum bestimmt und vorzugsweise in einem Textfile definierten Formates im Rechner abgespeichert. Aus diesen farbmetrischen Daten der Vorlage kann dann mit einer an sich bekannten Software z.B. ein ICC Profil berechnet werden.

Der Ablauf zum Ausmessen einer Transmissions-Testchart ist analog wie bei der vorstehend beschrieben Remissionsmessung. Zusätzlich wird mit dem Scanner oder der digitalen Kamera die Inhomogenität der Durchlichtbeleuchtung ausgemessen und die vom Farbmesskopf ermittelten Spektralmesswerte werden damit kompensiert.

Vor dem Einlegen der Transmissionstestchart (Dia, Film, Folie ..) in den Scanner gemäss den Figuren 3-9 oder auf den Messtisch gemäss Fig. 1 wird mit der bildgebenden Einheit die Lichtverteilung der Durchlichtbeleuchtung ausgemessen und abgespeichert. Danach wird die Testchart in den Scanner oder auf den Messtisch gelegt und ein Bild derselben aufgenommen. Dieses Bild wird mit einem Rechner mit Methoden der Bildverarbeitung analysiert, wobei der Typ der Testchart sowie die genaue Lage der einzelnen Farbfelder bestimmt werden (siehe oben). Anschliessend werden mit dem Farbmesskopf an den so gefundenen Orten die farbmetrischen Werte und oder das Spektrum der Farbfelder bestimmt. Die Artefakte in den Spektralmesswerten, welche durch die örtlich nicht konstante (inhomogene) Transmissionbeleuchtung verursacht werden, können anschliessend mit den zuvor aufgenommenen Daten des Bildes der Lichtverteilung der Transmissionbeleuchtung kompensiert werden. Aus den so ermittelten farbmetrischen Daten kann dann beispielsweise ein ICC Profil eines Foliendruckers berechnet werden.

Ein weiterer wichtiger Aspekt der Erfindung ist die Möglichkeit der Messung im Bild zur Berechnung von Regelempfehlungen zur Regelung von Ausgabegeräten wie zum Beispiel Druckmaschinen. Zur Regelung von Druckmaschinen mittels "Messung im Bild", wie z.B. in EP-A 0 914 945 beschrieben, werden heute Spektralscanner eingesetzt, welche von jedem Bildpunkt das komplette Spektrum erfassen. Dies ist zwar eine elegante, aber durch die komplexe Hardware eines Spektralscanners sehr kostenintensive Methode. Ein für diese Zwecke geeigneter Spektralscanner der Firma Heidelberg Druckmaschinen ist z.B. in EP-A 0 847 187 beschrieben.

Die erfindungsgemässe Kombination einer Digital-Kamera oder eines Scanners mit einem in X- und Y-Richtung verschiebbaren Farb- oder Spektralmesskopf kann mit deutlich geringerem technischen Aufwand, als für einen kompletten Spektralscanner nötig ist, realisiert werden und bei nur leicht grösserem Zeitbedarf vergleichbare Resultate liefern.

Im folgenden ist ein typischer Ablauf der Regelung eines Ausgabegerätes durch spektrale Messung im Bild beschrieben.

Die Prepress Daten der zu druckenden Vorlage werden in digitaler Form (z.B. im PDF- oder CIP3-Format) übernommen. Mittels geeigneter Algorithmen werden in an sich bekannter Weise diejenigen Punkte im Bild automatisch bestimmt, welche sich aufgrund ihrer farblichen Zusammensetzung (Schichtaufbau) und der Homogenität der Bildregion für die Regelung am besten eignen. Dem Anwender kann die Möglichkeit gegeben werden diese Punkte zu modifizieren (Punkte hinzufügen, löschen oder verschieben). Ein erster Druckbogen wird jetzt ausgegeben und auf der erfindungsgemässen Messvorrichtung plaziert. Je nach Ausführungsform wird mit Scanner oder Digital-Kamera ein Bild des Druckbogens aufgenommen. Dieses Bild wird mit den Prepress Daten korreliert, wodurch die Positionen der spektral auszumessenden Punkte auf der Vorlage ohne Interaktion des Anwenders sehr genau bestimmt werden können. An den so gefundenen Messpositionen werden jetzt mit dem Spektralmesskopf die farbmetrischen Informationen bestimmt und daraus mit geeigneten Algorithmen in an sich bekannter Weise die Regelempfehlungen für das Ausgabegerät bestimmt. Mit den gemäss diesen Regelempfehlungen neuen Einstellungen des Ausgabegeräts wird ein weiterer Bogen ausgegeben und wie oben beschrieben ausgemessen und die Regelparameter gegebenen Falles angepasst, bis die erforderliche Qualität erreicht ist. Danach wird nur noch in bestimmten Intervallen ein Bogen ausgemessen und gegebenen Falls die Regelparameter angepasst, um eine gleichbleibende Qualität der Ausgabe zu garantieren.

Die Anordnung eines Farbmesskopfs bzw. Spektralmesskopfs in einem im wesentlichen herkömmlichen Transmissions-Scanner gemäss den Ausführungsformen der Figuren 6-9 führt zu einem sehr kostengünstigen Aufbau eines spektralen XY-Transmissions-Scanners, da für die Abtastzeile des Scanners und den Spektralmesskopf die gleiche Beleuchtung und derselbe X-Verschiebemechanismus verwendet werden kann.

Die erfindungsgemässe Kombination eines bildgebenden Gerätes (Scanner oder Digitalkamera) mit einem Farbmesskopf zur farbmetrischen Vermessung von Testcharts hat verglichen mit den bisher für diese Aufgabe eingesetzten, eingangs erläuterten Geräten eine Reihe von Vorteilen:

Der Anwender muss keine Angabe über die Lage der Farbfelder (Messpositionen) sowie den Typ der Testchart machen, da diese Informationen mittels Bildverarbeitungsmethoden aus den Bilddaten der Vorlage bestimmt werden. Dieses Vorgehen erhöht die Bedienerfreundlichkeit und eliminiert eine potentielle Fehlerquelle.

Durch die im Vergleich mit einem scannenden Farbmesskopf erreichbare hohe örtliche Auflösung des Scanners oder der digitalen Kamera kann die Lage der Farbfelder sehr genau bestimmt werden. Die kleinste farbmetrisch messbare Farbfeldgrösse kann dadurch nur unwesentlich grösser als die Messapertur des Farbmesskopfes gewählt werden, ohne dass Fehlmessungen durch falsche Positionierung und somit Mitbewertung des Lichts von benachbarten Feldern entstehen. Kleine Felder ermöglichen eine grosse Anzahl von Farbfeldern bei gegebener Vorlagengrösse, was der Qualität der ICC Profile zugute kommt.

Da die Lage der Farbfelder nicht durch Mehrfachmessungen mit dem Farbmesskopf detektiert werden muss, wie dies bei scannenden Handmessgeräten oder Streifenmessgeräten der Fall ist, wird die für die Erfassung der farbmetrischen Messwerte nötige Zeit signifikant verkürzt.

Es bestehen keine Anforderungen an eine spezielle Anordnung der Farbfelder wie beispielsweise einem minimalen delta E zwischen zwei Feldern, wie dies bei Verwendung von scannenden Messgeräten Voraussetzung ist.

Da die Testchart nach der Messung nicht nur farbmetrisch sondern auch digital als hoch aufgelöstes Bild vorliegt, können durch Verschmutzung oder Kratzer entstandene Artefakte in den farbmetrischen Messwerten erkannt und ignoriert, korrigiert oder nochmals gemessen werden.

Bei Testcharts, welche inhomogene Farbfelder (grosse farbmetrische Schwankungen innerhalb der einzelnen Messfelder) aufweisen, kann mit dem Farbmesskopf durch Mehrfachmessung an verschiedenen Stellen im Feld und der anschliessenden Mittelwertbildung die Genauigkeit der farbmetrischen Werte deutlich erhöht werden. Aus der Analyse der Bilddaten der Vorlage kann die Homogenität der einzelnen Farbfelder bestimmt werden. Ist diese gering, kann automatisch durch Mehrfachmessung die Qualität in akzeptablem Rahmen gehalten werden.

Durch die Erfassung der Inhomogenität der Beleuchtung mit der bildgebenden Einheit (Abtastzeile oder Digitalkamera) anstatt (wie beim Stand der Technik) mit dem Spektralmesskopf kann die Messzeit signifikant verkürzt werden.

## Patentansprüche

1. Verfahren zur farbmetrischen Ausmessung einer zweidimensionalen Vorlage, wobei ein relativ zur Vorlage zweidimensional beweglich angetriebener Farbmesskopf (30) rechnergesteuert an vorgegebene Messpositionen der Vorlage (V) gefahren wird und die Vorlage an diesen Messpositionen mittels des Farbmesskopfs farbmetrisch ausgemessen wird, **dadurch gekennzeichnet, dass** in einem ersten Schritt die Vorlage (V) mittels einer farbtauglichen fotoelektrischen Abtasteinrichtung (20) punktweise fotoelektrisch abgetastet und aus den dabei gewonnenen Abtastwerten eine digitale Farbdarstellung (41) der Vorlage erzeugt wird, dass in einem zweiten Schritt aus der digitalen Farbdarstellung (41) der Vorlage die Messpositionen (43) ermittelt werden, und dass in einem dritten Schritt der Farbmesskopf (30) relativ zur Vorlage (V) an die so ermittelten Messpositionen (43) gefahren und die Vorlage (V) an diesen Messpositionen farbmetrisch ausgemessen wird.

2. Verfahren nach Anspruch 1, **dadurch gekennzeichnet, dass** die Abtasteinrichtung (20) mit einer so hohen Auflösung arbeitet, dass die Abtastpunkte wesentlich kleiner sind als die Messapertur des Farbmesskopfs (30).

3. Verfahren nach einem der vorangehenden Ansprüche, **dadurch gekennzeichnet, dass** als Abtasteinrichtung eine digitale Kamera (20) verwendet wird.

4. Verfahren nach einem der Ansprüche 1-2, **dadurch gekennzeichnet, dass** als Abtasteinrichtung ein insbesondere zeilenweise arbeitender Einzug- oder Flachbettscanner (120; 220) verwendet wird.

5. Verfahren nach einem der vorangehenden Ansprüche, **dadurch gekennzeichnet, dass** als Farbmesskopf (30) ein Spektralmesskopf verwendet wird.

6. Verfahren nach einem der vorangehenden Ansprüche, **dadurch gekennzeichnet, dass** die Ermittlung der Messpositionen (43) aus der digitalen Farbdarstellung (41) der Vorlage (V) unter Einbezug von Methoden der digitalen Bildverarbeitung erfolgt.

7. Verfahren nach einem der vorangehenden Ansprüche, **dadurch gekennzeichnet, dass** die Vorlage (V) eine opake oder transparente Farbmesskarte ist.

8. Verfahren nach einem der vorangehenden Ansprüche, **dadurch gekennzeichnet, dass** für die Ausmessung von transparenten Vorlagen mit der Abtasteinrichtung (20) die Lichtverteilung der Durchlichtbeleuchtung ausgemessen wird und dass die vom Farbmesskopf (30) ermittelten Spektralmesswerte anhand der ausgemessenen Lichtverteilung so korrigiert werden, dass die Inhomogenität der Lichtverteilung der Durchlichtbeleuchtung kompensiert wird.

9. Verfahren nach einem der vorangehenden Ansprüche, **dadurch gekennzeichnet, dass** z.B. durch Verschmutzung oder Kratzer der Vorlage entstandene Artefakte in der digitalen Farbdarstellung erkannt und bei der Verarbeitung der farbmetrischen Messwerte berücksichtigt werden.

10. Vorrichtung zur farbmetrischen Ausmessung einer zweidimensionalen Vorlage, mit einem Farbmesskopf (30) zur farbmetrischen Ausmessung der Vorlage (V) an gewünschten Messpositionen, wobei die Vorlage (V) und der Farbmesskopf (30) relativ zueinander zweidimensional beweglich angetrieben sind, und mit einem Rechner (R) sowie von diesem angesteuerten Antriebsmitteln (14), um den Farbmesskopf (30) an die gewünschten Messpositionen (43) zu bewegen, eine Messung auszulösen und die vom Farbmesskopf erzeugten Messwerte (44) einzulesen und zur weiteren Verwendung zu speichern, **dadurch gekennzeichnet, dass** eine farbtaugliche fotoelektrische Abtasteinrichtung (20) zur punktweisen fotoelektrischen Abtastung der gesamten Vorlage (V) vorgesehen ist und dass der Rechner (R) dazu ausgebildet ist, aus den von der Abtasteinrichtung (20) erzeugten Abtastwerten eine digitale Farbdarstellung (41) der Vorlage zu erzeugen und aus dieser digitalen Farbdarstellung der Vorlage die Messpositionen (43) zu ermitteln.

11. Vorrichtung nach Anspruch 10, **dadurch gekennzeichnet, dass** die Abtasteinrichtung (20) eine so hohe Auflösung aufweist, dass die Abtastpunkte wesentlich kleiner sind als die Messapertur des Farbmesskopfs (30).

12. Vorrichtung nach einem der Ansprüche 10-11, **dadurch gekennzeichnet, dass** die Abtasteinrichtung eine digitale Kamera (20) ist.

13. Vorrichtung nach einem der Ansprüche 10-11, **dadurch gekennzeichnet, dass** die Abtasteinrichtung ein insbesondere zeilenweise arbeitender Einzug- oder Flachbettscanner (120; 220) ist.

14. Vorrichtung nach einem der Ansprüche 10-13, **dadurch gekennzeichnet, dass** der Farbmesskopf (30) als Spektralmesskopf ausgebildet ist.

15. Vorrichtung nach einem der Ansprüche 10-14, **dadurch gekennzeichnet, dass** der Rechner (R) dazu ausgebildet ist, die Messpositionen (43) aus der digitalen Farbdarstellung (41) der Vorlage unter Einbezug von Methoden der digitalen Bildverarbeitung zu ermitteln.

## Claims

1. A process for the colorimetric measurement of a two-dimensional original, whereby a colour measuring head (30) that is driven to move two-dimensionally relative to the original is moved under computer control to predetermined measuring positions of the original (V) and the original is colorimetrically measured at these measuring positions by means of the colour measuring head,
**characterised in that** in a first step the original (V) is photoelectrically scanned pixel-by-pixel by means of a colour-enabled photoelectric scanning device (20) and a digital colour representation (41) of the original is produced from the scanning values obtained thereby,
**in that** in a second step the measuring positions (43) are determined from the digital colour representation (41) of the original,
and **in that** in a third step the colour measuring head (30) is moved relative to the original (V) to the measuring positions (43) determined in this manner and the original (V) is colorimetrically measured at these measuring positions.

2. A process according to Claim 1,
**characterised in that** the scanning device (20) works at such a high resolution that the scanning points are substantially smaller than the measurement aperture of the colour measuring head (30).

3. A process according to one of the preceding Claims,
**characterised in that** a digital camera (20) is used as the scanning device.

4. A process according to one of Claims 1 to 2,
**characterised in that** a sheet-feed or flat bed scanner (120; 220) that operates line-by-line in particular is used as the scanning device.

5. A process according to one of the preceding Claims,
**characterised in that** a spectral measuring head is used as the colour measuring head (30).

6. A process according to one of the preceding Claims,
**characterised in that** the determination of the measuring positions (43) from the digital colour representation (41) of the original (V) is performed by including digital image processing methods.

7. A process according to one of the preceding Claims,
**characterised in that** the original (V) is an opaque or a transparent colour measurement chart.

8. A process according to one of the preceding Claims,
**characterised in that** the light distribution of the transmitted light illumination is measured for the measurement of transparent originals with the scanning device (20)
and **in that** the spectral measured values determined by the colour measuring head (30) are corrected by means of the measured light distribution so that the non-homogeneity of the light distribution of the transmitted light distribution is compensated.

9. A process according to one of the preceding Claims,
**characterised in that** artefacts produced e.g. by dirt or scratches on the original are identified in the digital colour representation and are taken into consideration when processing the colorimetric measured values.

10. An apparatus for the colorimetric measurement of a two-dimensional original, comprising a colour measuring head (30) for the colorimetric measurement of the original (V) at desired measuring positions, the original (V) and the colour measuring head (30) being driven to move two-dimensionally relative to one another, and comprising a computer (R) and also drive means (14) controlled thereby in order to move the colour measuring head (30) to the desired measuring positions (43), to trigger a measurement and to read in the measured values (44) produced by the colour measuring head and to store them for further use,
**characterised in that** a colour-enabled, photoelectric scanning device (20) is provided for the pixel-by-pixel photoelectric scanning of a whole original (V)
and **in that** the computer (R) is designed to produce a digital colour representation (41) of the original from the scanning values produced by the scanning device (20) and to determine the measuring positions (43) from this digital colour representation of the original.

11. An apparatus according to Claim 10,
**characterised in that** the scanning device (20) has such a high resolution that the scanning points are considerably smaller than the measuring aperture of the colour measuring head (30).

12. An apparatus according to one of Claims 10 to 11,
**characterised in that** the scanning device is a digital camera (20).

13. An apparatus according to one of Claims 10 to 11,
**characterised in that** the scanning device is a sheet-feed or flat bed scanner (120; 220) that works line-by-line in particular.

14. An apparatus according to one of Claims 10 to 13,
**characterised in that** the colour measuring head (30) is designed as a spectral measuring head.

15. An apparatus according to one of Claims 10 to 14,
**characterised in that** the computer (R) is designed to determine the measuring positions (43) from the digital colour representation (41) of the original by including digital image processing methods.

## Revendications

1. Procédé de mesure colorimétrique d'un document bidimensionnel, une tête de mesure de couleurs (30) entraînée de manière mobile en deux dimensions par rapport au document étant amenée en des positions de mesure prédéterminées du document (V) sous le contrôle d'un ordinateur et le document étant mesuré en termes de colorimétrie en ces positions de mesure au moyen de la tête de mesure de couleurs, **caractérisé en ce que** dans une première étape, le document (V) est sondé photo-électriquement et par points au moyen d'un dispositif (20) de sondage photoélectrique compatible avec les couleurs et, à partir des valeurs de sondage obtenues, une représentation numérique en couleurs (41) du document est produite, **en ce que** dans une deuxième étape, les positions de mesure (43) sont déterminées à partir de la représentation numérique en couleurs (41), et **en ce que** dans un troisième étape, la tête de mesure de couleurs (30) est déplacée par rapport au document (V) jusqu'aux positions de mesure (43) ainsi déterminées et le document (V) est mesuré en termes de colorimétrie en ces positions de mesure.

2. Procédé selon la revendication 1, **caractérisé en ce que** le dispositif de sondage (20) travaille avec une résolution tellement élevée que les points de sondage sont nettement plus petits que l'ouverture de mesure de la tête de mesure de couleurs (30).

3. Procédé selon l'une des revendications précédentes, **caractérisé en ce qu'**une caméra numérique (20) est utilisée comme dispositif de sondage.

4. Procédé selon l'une des revendications 1 à 2, **caractérisé en ce que** l'on utilise comme dispositif de sondage un scanner à plat ou à insertion (120 ; 220) fonctionnant en particulier par lignes.

5. Procédé selon l'une des revendications précédentes, **caractérisé en ce que** l'on utilise une tête de mesure spectrale comme tête de mesure de couleurs (30).

6. Procédé selon l'une des revendications précédentes, **caractérisé en ce que** la détermination des positions de mesure (43) à partir de la représentation numérique en couleurs (41) du document (V) se fait en recourant à des méthodes de traitement numérique d'images.

7. Procédé selon l'une des revendications précédentes, **caractérisé en ce que** le document (V) est une mire de mesure de couleurs opaque ou transparente.

8. Procédé selon l'une des revendications précédentes, **caractérisé en ce que**, pour la mesure de documents transparents avec le dispositif de sondage (20), la répartition lumineuse de l'éclairage par transparence est mesurée et **en ce que** les valeurs de mesure spectrale déterminées par la tête de mesure de couleurs (30) sont corrigées à partir de la répartition lumineuse mesurée, de sorte que les inhomogénéités de la répartition lumineuse de l'éclairage par transparence sont compensées.

9. Procédé selon l'une des revendications précédentes, **caractérisé en ce que** les artefacts provoqués par exemple par des saletés ou des rayures sur le document sont détectées sur la représentation numérique en couleurs et prises en compte lors du traitement des mesures colorimétriques.

10. Dispositif de mesure colorimétrique d'un document bidimensionnel, avec une tête de mesure de couleurs (30) pour la mesure colorimétrique du document (V) en des positions de mesure souhaitées, le document (V) et la tête de mesure de couleurs (30) étant entraînés de manière mobile en deux dimensions l'un par rapport à l'autre, et avec un ordinateur (R) ainsi que des moyens d'entraînement (14) commandés par celui-ci pour déplacer la tête de mesure de couleurs (30) jusqu'aux positions de mesure souhaitées, déclencher une mesure et lire les valeurs de mesure (44) produites par la tête de mesure de couleurs et les enregistrer en vue de leurs utilisation ultérieure, **caractérisé en ce qu'**un dispositif de sondage photoélectrique (20) compatible avec les couleurs est prévu pour sonder photoélectriquement et par points tout le document (V), et **en ce que** l'ordinateur (R) est conformé pour, à partir des valeurs de sondage produites par le dispositif de sondage (20), créer une représentation numérique en couleurs (41) du document et déterminer les positions de mesure (43) à partir de cette représentation numérique en couleurs du document.

11. Dispositif selon la revendication 10, **caractérisé en ce que** le dispositif de sondage (20) présente une résolution tellement élevée que les points de sondage sont nettement plus petits que l'ouverture de mesure de la tête de mesure de couleurs (30).

12. Dispositif selon l'une des revendications 10 - 11, **caractérisé en ce que** le dispositif de sondage est une caméra numérique (20).

13. Dispositif selon l'une des revendications 10 - 11, **caractérisé en ce que** le dispositif de sondage est un scanner à plat ou à insertion (120 ; 220) fonctionnant en particulier par lignes.

14. Dispositif selon l'une des revendications 10 - 13, **caractérisé en ce que** la tête de mesure de couleurs (30) est conformée en tête de mesure spectrale.

15. Dispositif selon l'une des revendications 10 - 14, **caractérisé en ce que** l'ordinateur (R) est conformé pour déterminer les positions de mesure (43) à partir de la représentation numérique en couleurs (41) du document (V) en recourant à des méthodes de traitement numérique d'images.
